# EUROPÄISCHE PATENTSCHRIFT

(11) **EP 2 228 459 B1**
(45) Veröffentlichungstag und Bekanntmachung des Hinweises auf die Patenterteilung: **26.10.2011**
(21) Anmeldenummer: 09153749.8
(22) Anmeldetag: 26.02.2009
(51) Int. Cl.: C21D 1/673, C21D 6/00, C21D 9/48, C21D 9/50, C22C 38/04, C22C 38/44, B62D 25/00, B62D 25/04

(54) **Bauteil mit unterschiedlichen Festigkeitseigenschaften**
Component with different stability characteristics
Composant doté de propriétés de résistance variées

(43) Veröffentlichungstag der Anmeldung: 15.09.2010
(73) Patentinhaber: ThyssenKrupp Steel Europe AG, 47166 Duisburg (DE)
(72) Erfinder: Lenze, Franz-Josef, 57368, Lennestadt (DE); Sikora, Sascha, 44534, Lünen (DE); Becker, Jens-Ulrik, 47058, Duisburg (DE); Dornscheidt, Christian, 40629, Düsseldorf (DE); Korves, Lukas, 46325, Borken (DE)
(74) Vertreter: Cohausz & Florack

(56) Entgegenhaltungen:
- EP-A1- 1 705 257
- EP-A1- 2 028 435
- EP-A2- 1 195 208
- WO-A1-2008/024042
- DE-A1-102004 054 795
- DE-A1-102007 062 597

## Beschreibung

Die Erfindung betrifft ein Verfahren zur Herstellung eines Bauteils, insbesondere eines Bauteils für ein Kraftfahrzeug, wobei das Bauteil aus einer ersten Platine und mindestens einer zweiten Platine besteht, beide Platinen stoff-, form- und/oder kraftschlüssig miteinander verbunden sind und gemeinsam zum Bauteil umgeformt werden. Darüber hinaus betrifft die Erfindung ein Bauteil bestehend aus mindestens einer ersten und einer zweiten, miteinander stoff-, form- und/oder kraftschlüssig verbundenen und gemeinsam umgeformten Platine sowie vorteilhafte Verwendungen des erfindungsgemäßen Bauteils.

Insbesondere im Fahrzeugbau werden an crashrelevante Bauteile immer höhere Anforderungen gestellt. Einerseits sollen die Bauteile sehr hohe Festigkeiten aufweisen, auf der anderen Seite müssen die Bauteile noch genügend Duktilität gewährleisten, um beispielsweise Deformationen im Falle eines Unfalls ohne Bruch zu überstehen. Die Duktilität eines Bauteils ist dafür verantwortlich, wie hoch dessen Energieaufnahmevermögen ist. Crashrelevante Bauteile sollen daher bei maximaler Festigkeit eine möglichst hohe Duktilität, d.h. möglichst hohe Dehnungswerte bzw. Bruchdehnungswerte aufweisen. Durch den Einsatz von kaltumformbaren Stahlgüten oder den Einsatz von presshärtbaren Stählen, beispielsweise Mangan-Bor-Stählen, konnten diese Anforderungen nicht immer erfüllt werden. Zwar wird durch das Warmumformen bzw. das Presshärten ermöglicht, maßhaltige Bauteile mit sehr hohen Festigkeiten von mehr als 1500 MPa herzustellen. Das durch das Herstellverfahren bedingte martensitische Gefüge der Bauteile lässt die Restbruchdehnung jedoch auf nur ca. 5 bis 8% sinken. Für energieabsorbierende Bauteile ist diese Restbruchdehnung jedoch zu gering, um ausreichend mechanische Energie in Verformungsenergie umzuwandeln und damit im Falle eines Unfalls abzubauen. Durch gezieltes Anlassen von pressgehärteten Bauteilen können zwar Bereiche mit deutlich höherer Bruchdehnung erzeugt werden, die Steigerung der Bruchdehnung ist jedoch auf ca. maximal 20% begrenzt. Um dennoch Bauteile mit an den jeweiligen Anwendungsfall besser angepassten Festigkeitseigenschaften zur Verfügung zu stellen, wird in der deutschen Offenlegungsschrift DE 10 2004 054 795 A1 vorgeschlagen, ein Karosseriebauteil für ein Fahrzeug aus zwei fest miteinander verbundenen Blechen, einem borlegierten Vergütungs- oder Einsatzstahlblech und mindestens einem weiteren Blech aus einem etwa gleichwertigen oder anderem Stahlwerkstoff herzustellen. Zumindest der aus dem Bor legierten Vergütungs- oder Einsatzstahl gebildete Bauteilbereich soll durch Presshärten gehärtet werden. Dennoch sind die erzielbaren Bruchdehnungseigenschaften aufgrund der vorgeschlagenen Stahlwerkstoffe beschränkt.

Der vorliegenden Erfindung liegt damit die Aufgabe zugrunde, ein Verfahren zur Herstellung eines Bauteils, insbesondere eines Bauteils für ein Kraftfahrzeug, vorzuschlagen, mit welchem Bauteile für Kraftfahrzeuge mit deutlich höheren Bruchdehnungswerten bei gleichbleibend hoher Festigkeit hergestellt werden können. Darüber hinaus liegt der vorliegenden Erfindung die Aufgabe zugrunde, ein entsprechend hergestelltes Bauteil anzugeben und vorteilhafte Verwendungen dieses Bauteils vorzuschlagen.

Die oben aufgezeigte Aufgabe wird gemäß einer ersten Lehre der vorliegenden Erfindung dadurch gelöst, dass die erste Platine aus einem presshärtbaren Stahlwerkstoff und mindestens eine weitere Platine aus einem hochmanganhaltigen Stahlwerkstoff mit einem Mangangehalt von 6 Gew.-% bis 30 Gew.-% und mit im Wesentlichen austenitischem Gefüge besteht und, während des gemeinsamen Umformens die presshärtbare Platine warmumgeformt und pressgehärtet wird.

Durch die Kombination des presshärtbaren Stahlwerkstoffs mit mindestens einem hochmanganhaltigen Stahlwerkstoff mit einem Mangangehalt von 6 Gew.-% bis 30 Gew.-% wird erreicht, dass zwar der presshärtbare Stahlwerkstoff im Umformwerkzeug pressgehärtet werden kann und so hohe Festigkeiten bereitgestellt werden. Die aus dem hochmanganhaltigen Stahlwerkstoff und im Wesentlichen austenitischem Gefüge aufweisende zweite Platine behält aber trotz der hohen Temperaturen beim gemeinsamen Warmumformen das Gefüge bei. Im Ergebnis liegt nach der Umformung die erste Platine aus einem presshärtbaren Stahlwerkstoff mit im Wesentlichen martensitischem Gefüge vor, während dessen die zweite Platine immer noch austenitisches Gefüge mit einer hohen Restbruchdehnung vorliegt. Der Bereich des Bauteils bestehend aus dem austenitischen, hochmanganhaltigen Stahlwerkstoff kann dann sehr hohe Dehnungswerte von deutlich mehr als 50% zur Verfügung stellen. Das Energieaufnahmevermögen derartig hergestellter Bauteile, insbesondere Strukturbauteile, eines Kraftfahrzeuges kann hierdurch deutlich erhöht werden.

Gemäß einer ersten Ausgestaltung des erfindungsgemäßen Verfahrens werden beide Platinen vor dem Umformen auf eine Temperatur oberhalb der AC₃-Temperatur erwärmt, so dass der presshärtbare Stahlwerkstoff auf einfache Weise durch Abkühlen im Umformwerkzeug nahezu vollständig in martensitisches Gefüge umwandelbar ist. Die zweite Platine aus hochmanganhaltigem Stahlwerkstoff behält das im Wesentlichen austenitische Gefüge bei.

Eine besonders einfache Umformung der zweiten Platine gemeinsam mit der ersten Platine kann dadurch erfolgen, dass die hochmanganhaltige Platine während des Umformens temperiert, vorzugsweise bei Werkzeugtemperaturen von 400 650°C umgeformt wird. Hochmanganhaltige Stähle können bei diesen Werkzeugtemperaturen leichter umgeformt werden, ohne eine Gefügeumwandlung zu durchlaufen. Gemäß einer weiter bevorzugten Ausführungsform des erfindungsgemäßen Verfahrens besteht die hochmanganhaltige Platine aus einem Stahlwerkstoff mit folgender Legierungszusammensetzung in Gewichtsprozent:

| | | | | |
|---|---|---|---|---|
| | | C | ≤ | 1,25 %, |
| | | Si | ≤ | 8,0 %, |
| 6,0 % | ≤ | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |

Rest Fe und unvermeidbaren Verunreinigungen.

Es hat sich gezeigt, dass Platinen aus dem angegebenen Werkstoff auch bei einer Erwärmung oberhalb des AC₃-Temperaturpunktes keine Gefügeumwandlung bei einer temperierten Umformung durchlaufen und daher auch nach der temperierten Umformung im Wesentlichen aus austenitischem Gefüge bestehen.

Noch höhere Dehnungswerte können gemäß einer weiteren Ausgestaltung des erfindungsgemäßen Verfahrens dadurch zur Verfügung gestellt werden, dass die hochmanganhaltige Platine aus einem Stahlwerkstoff mit folgender Legierungszusammensetzung in Gewichtsprozent besteht:

| | | | | |
|---|---|---|---|---|
| 0,01 % | ≤ | C | ≤ | 1,0 %, |
| 0,1 % | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |

Rest Fe und unvermeidbaren Verunreinigungen.

Die Eigenschaften des Bauteils können dadurch weiter verbessert werden, dass gemäß einer bevorzugten Ausführungsform des erfindungsgemäßen Verfahrens die Gehalte der Legierungsbestandteile Si, Al, Cr, Ti und Ni der hochmanganhaltigen Platine auf folgende Werte in Gewichtsprozent beschränkt werden:

| | | | | |
|---|---|---|---|---|
| 0,1 % | ≤ | Si | ≤ | 5 %, |
| 0,01 % | ≤ | Al | ≤ | 5 %, |
| 0,05 % | ≤ | Cr | ≤ | 6 %, |
| 0, 005 % | ≤ | Ti | ≤ | 0,3 %, |
| 0,1 % | ≤ | Ni | ≤ | 4 %. |

Die Beschränkung der Aluminium- und/oder Silizium-Gehalte auf maximal 5 Gew.-%, insbesondere auf maximal 3 Gew.-% verbessert die Schweißbarkeit der hochmanganhaltigen Platine. Chrom wird vorzugsweise zur Verbesserung der Korrosionseigenschaften auf maximal 6 Gew.-%, bevorzugt auf weniger als 4 Gew.-% beschränkt, da in diesem Fall die Bildung von Chromkarbiden reduziert wird. Der Nickel-Gehalt beträgt maximal 4 Gew.-%, um die Herstellkosten der hochmanganhaltigen Platine bei gleich bleibender Korrosionsbeständigkeit zu verringern. Titan bildet als Mikrolegierungselement Ausscheidungen und trägt zur Feinkörnigkeit des Gefüges bei, die positiv die mechanischen Eigenschaften der hochmanganhaltigen Platine beeinflusst. Bei mehr als 0,3 Gew.-% nimmt die Wirksamkeit des Titanzusatzes jedoch ab.

Vorzugsweise werden beide Platinen über ein Schweißverfahren stoffschlüssig verbunden, wobei ein Strahlschweißverfahren bevorzugt wird, da dieses besonders gute und präzise stoffschlüssige Verbindungen erzeugt.

Gemäß einer weiteren Ausgestaltung des erfindungsgemäßen Verfahrens wird die Erwärmung der Platinen auf oberhalb der AC₃-Temperatur unter Verwendung eines Schutzgases durchgeführt, so dass Verzunderungen der Oberfläche vermieden werden können. Die Verzunderung kann aber auch durch Verwendung beschichteter Platinen verhindert werden.

Gemäß einer zweiten Lehre der vorliegenden Erfindung wird die oben aufgezeigte Aufgabe für ein gattungsgemäßes Bauteil dadurch gelöst, dass die erste Platine aus einem presshärtbaren Stahlwerkstoff und zumindest die zweite Platine aus einem hochmanganhaltigen Stahlwerkstoff mit einem Mangangehalt von 6 Gew.-% bis 30 Gew.-% und mit im Wesentlichen austenitischem Gefüge besteht, und die erste Platine nach der Umformung pressgehärtet ist.

Die Kombination aus pressgehärteter erster Platine verbunden mit einer auch nach der Umformung ein austenitisches Gefüge aufweisende zweiten Platine ermöglicht die Bereitstellung von extrem hohen Festigkeitswerten in der pressgehärteten Platine kombiniert mit sehr hohen Dehnungswerten der hochmanganhaltigen Platine in unterschiedlichen Bereichen des Bauteils. Aufgrund der hohen Dehnungswerte können die erfindungsgemäßen Bauteile im Falle einer Deformation besonders viel mechanische Energie in Verformungsenergie umwandeln. Die erfindungsgemäßen Bauteile sind damit besonders gut für crashrelevante Bauteile eines Kraftfahrzeugs oder eines anderen Fahrzeugs geeignet.

Ein im Hinblick auf die zur Verfügung gestellten Dehnungswerte verbessertes Bauteil kann dadurch bereitgestellt werden, dass gemäß einer Ausgestaltung des erfindungsgemäßen Bauteils die hochmanganhaltige Platine aus einem Stahlwerkstoff mit folgender Legierungszusammensetzung in Gewichtsprozent besteht:

| | | | | |
|---|---|---|---|---|
| | | C | ≤ | 1,25 %, |
| | | Si | ≤ | 8,0 %, |
| 6,0 % | ≤ | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |

Rest Fe und unvermeidbaren Verunreinigungen.

Die aufgezeigte Legierungszusammensetzung der hochmanganhaltigen Platine gibt im Wesentlichen die Obergrenze von Legierungsbestandteilen an, welche neben Mangan in dem hochmanganhaltigen Stahlwerkstoff der zweiten Platine enthalten ist, so dass die hochmanganhaltige Platine im Wesentlichen aus austenitischem Gefüge besteht und somit durch das temperierte Umformen keine Umwandlung des Gefüges erfolgt.

Vorzugsweise besteht die hochmanganhaltige Platine gemäß einem weiteren Ausführungsbeispiel aus einem Stahlwerkstoff mit folgender Legierungszusammensetzung in Gewichtsprozent:

| | | | | |
|---|---|---|---|---|
| 0,01 % | ≤ | C | ≤ | 1,0 %, |
| 0,1 % | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |

Rest Fe und unvermeidbaren Verunreinigungen.

Mit der angegebenen Legierungszusammensetzung wird erreicht, dass die zweite, hochmanganhaltige Platine bei deren temperierter Umwandlung bzw. bei gleichzeitigem Presshärten der ersten Platine noch prozesssicherer keine Gefügeumwandlung durchläuft und im Wesentlichen austenitisches Gefüge aufweist. Auch die bereitgestellten Dehnungswerte erreichen für diese Legierungszusammensetzung Maximalwerte.

Die Eigenschaften des Bauteils in Bezug auf die Schweißbarkeit, Korrosionsschutz und Kosten können weiter dadurch verbessert werden, dass gemäß einer bevorzugten Ausführungsform die Gehalte der Legierungsbestandteile Si, Al, Cr, Ti und Ni der Stahllegierung der hochmanganhaltigen Platine auf folgende Werte in Gewichtsprozent beschränkt werden:

| | | | | |
|---|---|---|---|---|
| 0, 1 % | ≤ | Si | ≤ | 5 %, |
| 0,01 % | ≤ | Al | ≤ | 5 %, |
| 0,05 % | ≤ | Cr | ≤ | 6 %, |
| 0,005 % | ≤ | Ti | ≤ | 0,3 %, |
| 0,1 % | ≤ | Ni | ≤ | 4 %. |

Wie oben bereits ausgeführt, können zusätzlich vorzugsweise der Aluminium- und/oder Siliziumgehalt auf maximal 3 Gew.-% und/oder der Chromgehalt auf weniger als 4 Gew.-% beschränkt werden, um die Schweißbarkeit und die Korrosionsbeständigkeit zu verbessern.

Gemäß einer weiteren Ausführungsform des erfindungsgemäßen Bauteils wird das Bauteil aus einem "tailored Blank" hergestellt, wobei das "tailored Blank" aus mindestens der ersten und mit dieser stoffschlüssig verbundenen zweiten Platine besteht. Unter einem "tailored Blank" versteht der Fachmann ein an den spezifischen Anwendungsfall angepasstes Halbzeug, welches aus unterschiedlichen Materialdicken und/oder Materialgüten bestehen kann. Im vorliegenden Fall besteht das "tailored Blank" zumindest aus zwei unterschiedlichen Materialgüten, einerseits dem presshärtbaren Stahlwerkstoff, beispielsweise einem Mangan-Bor-Stahl, und andererseits aus einem hochmanganhaltigen Stahlwerkstoff mit im Wesentlichen austenitischem Gefüge. "Tailored Blanks" sind darüber hinaus üblicherweise stoffschlüssig, vorzugsweise durch eine Schweißnaht miteinander verbunden.

Alternativ oder kumulativ kann die zweite oder weitere hochmanganhaltige Platine als Verstärkung auf der ersten Platine angeordnet sein. Sogenannte Patches können im verstärkten Bereich gleichzeitig hohe Dehnungswerte und extrem hohe Festigkeitswerte zur Verfügung stellen. Kumulativ kann hierzu das Bauteil aus einem "tailored Blank" bestehen, wobei beispielsweise auf der ersten Platine aus einem presshärtbaren Stahlwerkstoff ein Patch aus einem hochmanganhaltigen Stahlwerkstoff mit im Wesentlichen austenitischem Gefüge angeordnet ist und gleichzeitig die erste Platine mit einer aus einem entsprechenden hochmanganhaltigen Werkstoff bestehenden weiteren Platine stoffschlüssig verbunden ist.

Durch die Bereitstellung extrem hoher Festigkeitswerte in Kombination mit hohen Dehnungswerten bei geringen Materialdicken bzw. geringem Gewicht ergeben sich vorteilhafte Verwendungen eines erfindungsgemäßen Bauteils als Strukturbauteil im Kraftfahrzeugbau, insbesondere als A-, B-, C-Säule, Längs- oder Querträger, Tunnelverstärkung, Dachrahmen oder Crashbox.

Es gibt nun eine Vielzahl von Möglichkeiten, das erfindungsgemäße Verfahren sowie die erfindungsgemäßen Bauteile auszugestalten. Hierzu wird verwiesen auf die den Patentansprüchen 1 und 8 nachfolgenden Patentansprüche sowie auf die Beschreibung von Ausführungsbeispielen in Verbindung mit der Zeichnung. Die Zeichnung zeigt in
- Fig. 1): eine schematische Schnittansicht eines Umformwerkzeugs während der Durchführung eines Ausführungsbeispiels des erfindungsgemäßen Verfahrens,
- Fig. 2): eine schematische Aufsicht auf ein erstes Ausführungsbeispiel eines erfindungsgemäßen Bauteils,
- Fig. 3): eine schematische Ansicht eines zweiten Ausführungsbeispiels eines erfindungsgemäßen Bauteils und
- Fig. 4): eine schematische perspektivische Ansicht einer Kraftfahrzeugkarosserie.

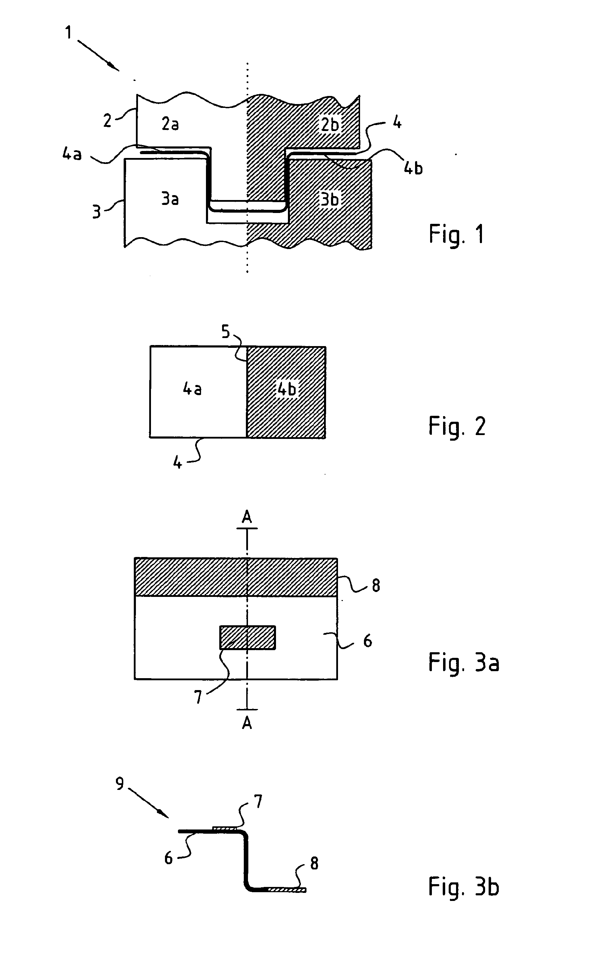

In Fig. 1) ist zunächst ein Umformwerkzeug 1 mit zwei Gesenkhälften 2 und 3 dargestellt. Das Formwerkzeug 1 weist zwei Werkzeughälften 2a, 2b bzw. 3a und 3b auf, welche in unterschiedlicher Art und Weise temperiert werden können. Fig. 1) zeigt dazu noch ein in das Umformwerkzeug eingelegtes "tailored Blank" 4, welches in einer Aufsicht noch einmal in Fig. 2) dargestellt ist. Das mit dem Umformwerkzeug 1 bereits teilweise umgeformte "tailored Blank" 4 besteht aus einer ersten Platine 4a, welche erfindungsgemäß aus einem presshärtbaren Stahlwerkstoff, beispielsweise einem Mangan-Bor-Stahl vom Typ 22 MnB5 besteht. Das "tailored Blank" wird zunächst auf eine Temperatur oberhalb der AC₃-Temperatur erwärmt. Die zweite Platine 4b besteht aus einem hochmanganhaltigen Stahlwerkstoff mit einem Kohlenstoffgehalt von 0,6 Gew.-%, einem Mangangehalt von 22 Gew.-% und 0,2 Gew.-% Silizium, Rest Fe mit unvermeidbaren Verunreinigungen.

Im Umformwerkzeug 1 werden die beiden miteinander über eine Schweißnaht 5, vorzugsweise eine Laserschweißnaht verbundenen Platinen 4a und 4b gemeinsam umgeformt, wobei die Bereiche 2b und 3b des Werkzeugs lediglich temperiert werden und der Bereich 2a und 3a für das Presshärten vorgesehen sind. Die Temperaturverläufe in den beiden unterschiedlichen Bereichen des Werkzeugs unterscheiden sich demnach dadurch, dass der Bereich 2a und 3a des Umformwerkzeugs 1 nach dem Warmumformen des "tailored Blanks" 4 abgeschreckt und insofern die Platine 4a pressgehärtet wird. Gleichzeitig wird die Platine 4b bei Temperaturen von etwa 400 bis 650°C temperiert umgeformt und anschließend langsam abgekühlt. Dadurch behält die Platine 4b ihr austenitisches Gefüge bei und kann extrem hohe Dehnungswerte von deutlich mehr als 50% zur Verfügung stellen.

Bei den Versuchen mit dem hochmanganhaltigen Stahlwerkstoff stellte sich überraschenderweise heraus, dass die Entfestigung aufgrund der hohen Umformtemperatur relativ gering ist, so dass die Platine 4b trotz des temperierten Warmumformens im vorliegenden Ausführungsbeispiel weiterhin sehr hohe Festigkeitswerte mit hohen Dehnungswerten aufweist.

Fig. 3a) zeigt nun eine schematische Draufsicht auf ein erfindungsgemäßes Bauteil, welches eine erste Platine 6 aus einem presshärtbaren Stahlwerkstoff aufweist, auf welcher eine Verstärkung 7 aus einer Platine bestehend aus einem hochmanganhaltigen Stahlwerkstoff angeordnet ist. Vorzugsweise ist die Verstärkung 7 stoffschlüssig durch Verschweißen mit der Platine 6 verbunden. Darüber hinaus ist mit der Platine 6 eine weitere hochmanganhaltige Platine 8 entlang der Kante der Platine 6 verbunden. Fig. 3b) zeigt das Bauteil aus Fig. 3a) in einer Schnittansicht entlang der Schnittachse A. Zu erkennen ist, dass das dargestellte Bauteil anwendungsspezifisch Verstärkungen 7 aus einem hochmanganhaltigen Stahlwerkstoff sowie Bereiche bestehend aus dem hochmanganhaltigen Stahlwerkstoff aufweist, um anwendungsgerecht einerseits hohe Festigkeitswerte und andererseits hohe Dehnungswerte zur Verfügung zu stellen. Das umgeformte Bauteil in Fig. 3b) ist durch gleichzeitiges Umformen aller drei Platinen hergestellt worden, wobei der Verstärkungsbereich 7 der Platine 6 lediglich temperiert umgeformt wurde.

Die Platine 6 des Ausführungsbeispiels aus Fig. 3a) besteht beispielsweise aus einem presshärtbaren Stahlwerkstoff vom Typ 22MnB5, wohingegen die Verstärkung 7 sowie die angeschweißte Platine 8 aus einem hochmanganhaltigen Werkstoff mit einem Kohlenstoffgehalt von 0,6 Gew.-%, 22 Gew.-% Mangan, 0,2 Gew.-% Silizium sowie 0,2 Gew.-% Vanadium aufweist. Die Bereitstellung von extrem hohen Dehnungswerten mit gleichzeitig sehr hohen Festigkeitswerten ergibt eine besonders gute Eignung des erfindungsgemäßen Bauteils für crashrelevante Strukturbauteile, vorzugsweise im Kraftfahrzeugbau.

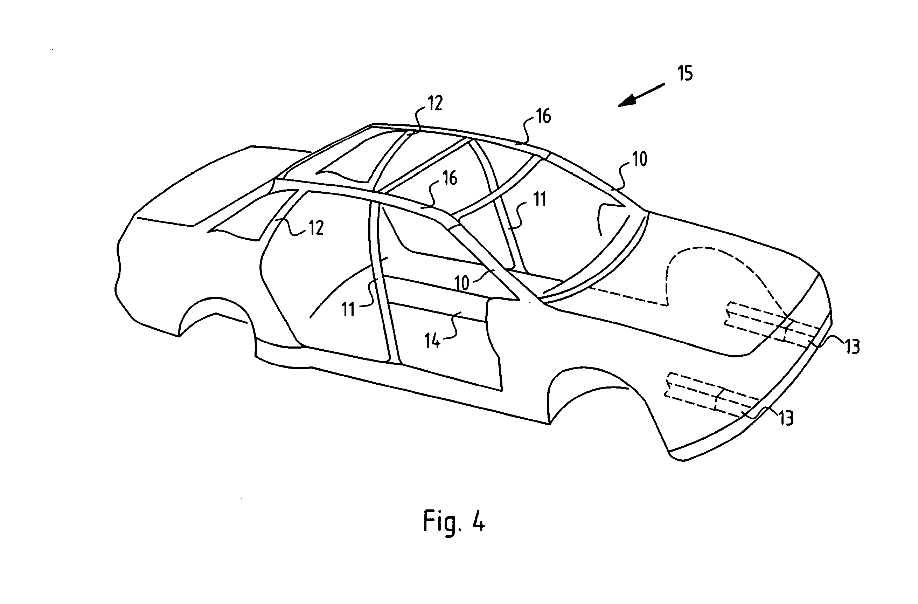

In Fig. 4 zeigt nun vorteilhafte Verwendungen des erfindungsgemäßen Bauteils anhand einer perspektivisch dargestellten Fahrzeugkarosserie 15. Sicherheitsrelevant und damit im Falle eines Unfalls von Deformationen betroffen sind in einem Kraftfahrzeug beispielsweise die A-, B-, und C-Säulen 10, 11, 12, die Crashboxen 13, welche üblicherweise im Bereich der Stoßfänger vorgesehen sind sowie der Dachrahmen 15. Aber auch nicht bezifferte, aber dargestellte Bauteile einer Kraftfahrzeugkarosserie, wie beispielsweise die Motorhaube, Kotflügel etc. stellen prinzipielle Verwendungsmöglichkeiten für das erfindungsgemäße Bauteil im Kraftfahrzeug dar. Natürlich werden ähnliche Anforderungen, also niedriges Gewicht bei sehr hoher Festigkeit und hohem Energieaufnahmevermögen in anderen Anwendungsgebieten beispielsweise dem Schienenfahrzeugbau gewünscht, so dass das erfindungsgemäße Bauteil auch hier vorteilhaft eingesetzt werden kann.

## Patentansprüche

1. Verfahren zur Herstellung eines Bauteils, insbesondere eines Bauteils für ein Kraftfahrzeug, wobei das Bauteil aus einer ersten Platine und mindestens einer zweiten Platine besteht, beide Platinen stoff-, form- und/oder kraftschlüssig miteinander verbunden sind und gemeinsam zum Bauteil umgeformt werden,
**dadurch gekennzeichnet, dass** die erste Platine aus einem presshärtbaren Stahlwerkstoff und mindestens eine weitere Platine aus einem hochmanganhaltigen Stahlwerkstoff mit einem Mangangehalt von 6 Gew.-% bis 30 Gew.-% und im Wesentlichen austenitischem Gefüge besteht und während des gemeinsamen Umformens die presshärtbare Platine warmumgeformt und pressgehärtet wird.

2. Verfahren nach Anspruch 1,
**dadurch gekennzeichnet, dass** beide Platinen vor dem Umformen auf eine Temperatur oberhalb der AC₃-Temperatur erwärmt werden.

3. Verfahren nach Anspruch 1 oder 2,
**dadurch gekennzeichnet, dass** die hochmanganhaltige Platine während des Umformens temperiert, vorzugsweise bei Werkzeugtemperaturen von 400 bis 650 °C umgeformt wird.

4. Verfahren nach einem der Ansprüche 1 bis 3,
**dadurch gekennzeichnet, dass** die hochmanganhaltige Platine aus einem Stahlwerkstoff mit folgender Legierungszusammensetzung in Gewichtsprozent besteht:
| | | | | |
|---|---|---|---|---|
| | | C | ≤ | 1,25 %, |
| | | Si | ≤ | 8,0 %, |
| 6,0 % | ≤ | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |
Rest Fe und unvermeidbaren Verunreinigungen.

5. Verfahren nach einem der Ansprüche 1 bis 4,
**dadurch gekennzeichnet, dass** die hochmanganhaltige Platine aus einem Stahlwerkstoff mit folgender Legierungszusammensetzung in Gewichtsprozent besteht:
| | | | | |
|---|---|---|---|---|
| 0,01 % | ≤ | C | ≤ | 1, 0 %, |
| 0, 1 % | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |
Rest Fe und unvermeidbaren Verunreinigungen.

6. Verfahren nach einem der Ansprüche 1 bis 5,
**dadurch gekennzeichnet, dass** die Anteile der Legierungsbestandteile Si, Al, Cr, Ti und Ni der Stahllegierung der hochmanganhaltigen Platine auf folgende Werte in Gewichtsprozent beschränkt werden:
| | | | | |
|---|---|---|---|---|
| 0,1 % | ≤ | Si | ≤ | 5 %, |
| 0,01 % | ≤ | Al | ≤ | 5 %, |
| 0,05 % | ≤ | Cr | ≤ | 6 %, |
| 0,005 % | ≤ | Ti | ≤ | 0,3 %, |
| 0,1 % | ≤ | Ni | ≤ | 4 %. |

7. Verfahren nach einem der Ansprüche 1 bis 6,
**dadurch gekennzeichnet, dass** beide Platinen über ein Schweißverfahren, insbesondere über ein Strahlschweißverfahren miteinander stoffschlüssig verbunden werden.

8. Verfahren nach einem der Ansprüche 1 bis 7,
**dadurch gekennzeichnet, dass** die Erwärmung der Platinen auf oberhalb der AC₃-Temperatur unter Verwendung eines Schutzgases erfolgt.

9. Bauteil (9) bestehend aus mindestens einer ersten und einer zweiten, miteinander stoff-, form- und/oder kraftschlüssig verbundenen und gemeinsam umgeformten Platine (4a, 4b, 6, 7, 8), hergestellt mit einem Verfahren gemäß Anspruch 1 bis 8, **dadurch gekennzeichnet, dass** die erste Platine (4a, 6) aus einem presshärtbaren Stahlwerkstoff und zumindest die zweite Platine (4b, 7, 8) aus einem hochmanganhaltigen Stahlwerkstoff mit einem Mangangehalt von 6 Gew.-% bis 30 Gew.-% und mit im Wesentlichen austenitischem Gefüge besteht, und die erste Platine nach der Umformung pressgehärtet ist, und in Wesentliches austenitisches Gefüge enthälte.

10. Bauteil nach Anspruch 9,
**dadurch gekennzeichnet, dass** die hochmanganhaltige Platine (4b, 7, 8) aus einem Stahlwerkstoff mit folgender Legierungszusammensetzung in Gewichtsprozent besteht:
| | | | | |
|---|---|---|---|---|
| | | C | ≤ | 1,25 %, |
| | | Si | ≤ | 8, 0 %, |
| 6,0 | % ≤ | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |
Rest Fe und unvermeidbaren Verunreinigungen.

11. Bauteil nach Anspruch 10 oder 11,
**dadurch gekennzeichnet, dass** die hochmanganhaltige Platine (4b, 7, 8) aus einem Stahlwerkstoff mit folgender Legierungszusammensetzung in Gewichtsprozent besteht:
| | | | | |
|---|---|---|---|---|
| 0,01 % | ≤ | C | ≤ | 1,0 %, |
| 0,1 % | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |
Rest Fe und unvermeidbaren Verunreinigungen.

12. Bauteil nach Anspruch 8 bis 11,
**dadurch gekennzeichnet, dass** die Anteile Legierungsbestandteile Si, Al, Cr, Ti und Ni der Stahllegierung der hochmanganhaltigen Platine auf folgende Werte beschränkt werden:
0,1 % ≤ Si ≤ 5 %,
0,01 % ≤ Al ≤ 5 %,
0,05 % ≤ Cr ≤ 6 %,
0,005 % ≤ Ti ≤ 0,3 %,
0,1 % ≤ Ni ≤ 4 %.

13. Bauteil nach Anspruch 8 bis 12,
**dadurch gekennzeichnet, dass** das Bauteil (9) aus einem "tailored Blank" (4) hergestellt ist, wobei das "tailored Blank" aus mindestens der ersten und mit dieser stoffschlüssig verbundenen zweiten Platine besteht.

14. Bauteil nach Anspruch 8 bis 13,
**dadurch gekennzeichnet, dass** die zweite oder weitere hochmanganhaltige Platine (4b, 7, 8) als Verstärkung (7) auf der ersten Platine (6) angeordnet ist.

15. Verwendung eines Bauteils nach Anspruch 8 bis 14 als Strukturteil im Kraftfahrzeugbau, insbesondere als A-, B-, C-Säule, Längs- oder Querträger, Tunnelverstärkung, Dachrahmen oder Crashbox.

## Claims

1. Method for producing a component, in particular a component for a motor vehicle, the component consisting of a first blank and at least a second blank, both blanks being joined together by material bonding, form-fit and/or force-fit and formed together into the component, **characterised in that** the first blank consists of a steel material which can be press hardened and at least a further blank consists of a steel material with a high manganese content of from 6 % by weight to 30 % by weight and a substantially austenitic structure and during the joint forming procedure, the press-hardenable blank is hot formed and press hardened.

2. Method according to claim 1, **characterised in that** both blanks are heated to a temperature above the AC₃ temperature before the forming procedure.

3. Method according to either claim 1 or claim 2, **characterised in that** during the forming procedure, the blank with a high manganese content is tempered, preferably formed at tool temperatures of 400 to 650°.

4. Method according to any one of claims 1 to 3, **characterised in that** the blank with a high manganese content consists of a steel material with the following alloy composition in % by weight:
| | | | | |
|---|---|---|---|---|
| | | C | ≤ | 1.25 %, |
| | | Si | ≤ | 8.0 %, |
| 6.0 % | ≤ | Mn | ≤ | 30 %, |
| | | Al | ≤ | 11.5 %, |
| | | Cr | ≤ | 10.0 %, |
| | | Ti | ≤ | 0.5 %, |
| | | Nb | ≤ | 0.5 %, |
| | | S | ≤ | 0.01 %, |
| | | Ni | ≤ | 10.0 %, |
| | | Cu | ≤ | 5 %, |
| | | Va | ≤ | 0.5 %, |
the remainder being Fe and unavoidable impurities.

5. Method according to any one of claims 1 to 4, **characterised in that** the blank with a high manganese content consists of a steel material with the following alloy composition in % by weight:
| | | | | |
|---|---|---|---|---|
| 0.01 % | ≤ | C | ≤ | 1.0 %, |
| 0.1 % | ≤ | Si | ≤ | 8.0 %, |
| 10.0 % | ≤ | Mn | ≤ | 30 %, |
| 0.01 % | ≤ | Al | ≤ | 10.0 %, |
| 0.05 % | ≤ | Cr | ≤ | 10.0 %, |
| 0.005 % | ≤ | Ti | ≤ | 0.5 %, |
| 0.005 % | ≤ | Nb | ≤ | 0.5 %, |
| | | S | ≤ | 0.01 %, |
| 0.1 % | ≤ | Ni | ≤ | 8.0 %, |
| 0.001 % | ≤ | Cu | ≤ | 5 %, |
| 0.005 % | ≤ | Va | ≤ | 0.5 %, |
the remainder being Fe and unavoidable impurities.

6. Method according to any one of claims 1 to 5, **characterised in that** the proportions of the alloy constituents Si, Al, Cr, Ti and Ni of the steel alloy of the blank with a high manganese content are restricted to the following values in % by weight:
| | | | | |
|---|---|---|---|---|
| 0.1 % | ≤ | Si | ≤ | 5 %, |
| 0.01 % | ≤ | Al | ≤ | 5 %, |
| 0.05 % | ≤ | Cr | ≤ | 6 %, |
| 0.005 % | ≤ | Ti | ≤ | 0.3 %, |
| 0.1 % | ≤ | Ni | ≤ | 4 %. |

7. Method according to any one of claims 1 to 6, **characterised in that** the two blanks are material bonded by a welding process, in particular by a beam welding process.

8. Method according to any one of claims 1 to 7, **characterised in that** the blanks are heated to a temperature above the AC₃ temperature using an inert gas.

9. Component (9) consisting of at least a first and a second blank (4a, 4b, 6, 7, 8) which are joined together by material bonding, form-fit and/or force-fit and are formed together, produced by a method according to claims 1 to 8, **characterised in that** the first blank (4a, 6) consists of a press-hardenable steel material and at least the second blank (4b, 7, 8) consists of a steel material with a high manganese content of from 6 % by weight to 30 % by weight and a substantially austenitic structure, and the first blank is press-hardened after being formed and contains a substantially martensitic structure.

10. Component according to claim 9, **characterised in that** the bank (4b, 7, 8) with a high manganese content consists of a steel material with the following alloy composition in % by weight:
| | | | | |
|---|---|---|---|---|
| | | C | ≤ | 1.25 %, |
| | | Si | ≤ | 8.0 %, |
| 6.0 % | ≤ | Mn | ≤ | 30 %, |
| | | Al | ≤ | 11.5 %, |
| | | Cr | ≤ | 10.0 %, |
| | | Ti | ≤ | 0.5 %, |
| | | Nb | ≤ | 0.5 %, |
| | | S | ≤ | 0.01 %, |
| | | Ni | ≤ | 10.0 %, |
| | | Cu | ≤ | 5 %, |
| | | Va | ≤ | 0.5 %, |
the remainder being Fe and unavoidable impurities.

11. Component according to either claim 10 or claim 11, **characterised in that** the blank (4b, 7, 8) with a high manganese content consists of a steel material with the following alloy composition in % by weight:
| | | | | |
|---|---|---|---|---|
| 0.01 % | ≤ | C | ≤ | 1.0 %, |
| 0.1 % | ≤ | Si | ≤ | 8.0 %, |
| 10.0 % | ≤ | Mn | ≤ | 30 %, |
| 0.01 % | ≤ | Al | ≤ | 10.0 %, |
| 0.05 % | ≤ | Cr | ≤ | 10.0 %, |
| 0.005 % | ≤ | Ti | ≤ | 0.5 %, |
| 0.005 % | ≤ | Nb | ≤ | 0.5 %, |
| | | S | ≤ | 0.01 %, |
| 0.1 % | ≤ | Ni | ≤ | 8.0 %, |
| 0.001 % | ≤ | Cu | ≤ | 5 %, |
| 0.005 % | ≤ | Va | ≤ | 0.5 %, |
the remainder being Fe and unavoidable impurities.

12. Component according to claims 8 to 11, **characterised in that** the proportions of the alloy constituents Si, Al, Cr, Ti and Ni of the steel alloy of the blank with a high manganese content are restricted to the following values:
| | | | | |
|---|---|---|---|---|
| 0.1 % | ≤ | Si | ≤ | 5 %, |
| 0.01 % | ≤ | Al | ≤ | 5 %, |
| 0.05 % | ≤ | Cr | ≤ | 6 %, |
| 0.005 % | ≤ | Ti | ≤ | 0.3 %, |
| 0.1 % | ≤ | Ni | ≤ | 4 %. |

13. Component according to claims 8 to 12, **characterised in that** the component (9) is produced from a "tailored blank" (4), the "tailored blank" consisting of at least the first blank and the second blank which is joined thereto by material bonding.

14. Component according to claims 8 to 13, **characterised in that** the second blank or further blank (4b, 7, 8) with a high manganese content is arranged as a reinforcement (7) on the first blank (6).

15. Use of a component according to claims 8 to 14 as a structural part in automotive engineering, in particular as an A-, B-, C-pillar, side member or cross member, tunnel reinforcement, roof frame or crash box.

## Revendications

1. Procédé de fabrication d'un composant, en particulier d'un composant pour un véhicule automobile, dans lequel le composant comporte un premier flan et au moins un deuxième flan, les deux flans sont reliés entre eux par liaison de matière, par liaison de forme et/ou par liaison de force et transformés, tous les deux, en un seul composant,
**caractérisé en ce que** le premier flan est constitué d'un matériau d'acier durcissable par pressage et **en ce qu'**au moins un autre flan est constitué d'un matériau d'acier à haute teneur en manganèse, avec une teneur en manganèse de 6 % en poids à 30 % en poids et une structure essentiellement austénitique et **en ce que** pendant le formage commun, le flan durcissable par pressage est mis en forme à chaud et durci par pressage.

2. Procédé selon la revendication 1,
**caractérisé en ce que** les deux flans sont chauffés, avant le formage à une température au-dessus de la température AC₃.

3. Procédé selon la revendication 1 ou 2,
**caractérisé en ce que** le flan à haute teneur en manganèse est recuit pendant le formage, est mis en forme, de préférence, à des températures d'outil de 400 à 650 °C.

4. Procédé selon l'une quelconque des revendications 1 à 3,
**caractérisé en ce que** le flan à haute teneur en manganèse est constitué d'un matériau d'acier avec la composition d'alliage en % en poids suivants :
| | | | | |
|---|---|---|---|---|
| | | C | ≤ | 1,25 %, |
| | | Si | ≤ | 8,0 %, |
| 6,0 % ≤ | | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |
le reste étant Fe et des impuretés inévitables.

5. Procédé selon l'une quelconque des revendications 1 à 4, **caractérisé en ce que** le flan à haute teneur en manganèse est constitué d'un matériau d'acier avec la composition d'alliage en % en poids suivante :
| | | | | |
|---|---|---|---|---|
| 0,01 % | ≤ | C | ≤ | 1,0 %, |
| 0,1 % | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |
le reste étant Fe et des impuretés inévitables.

6. Procédé selon l'une quelconque des revendications 1 à 5,
**caractérisé en ce que** les parts des composants d'alliage Si, Al, Cr, Ti et Ni de l'alliage d'acier du flan à haute teneur en manganèse sont limitées en % en poids aux valeurs suivantes :
| | | | | |
|---|---|---|---|---|
| 0,1 % | ≤ | Si | ≤ | 5 %, |
| 0,01 % | ≤ | Al | ≤ | 5 %, |
| 0,05 % | ≤ | Cr | ≤ | 6 %, |
| 0,005 % | ≤ | Ti | ≤ | 0,3 %, |
| 0,1 % | ≤ | Ni | ≤ | 4 %. |

7. Procédé selon l'une quelconque des revendications 1 à 6,
**caractérisé en ce que** les deux flans sont reliés entre eux par liaison de matière moyennant un procédé de soudage, en particulier un procédé de soudage par rayonnement.

8. Procédé selon l'une quelconque des revendications 1 à 7,
**caractérisé en ce que** le réchauffage des flans s'effectue à une température au-dessus de la température AC₃ moyennant l'utilisation d'un gaz de protection.

9. Composant (9) constitué d'au moins un premier et d'un deuxième flan (4a, 4b, 6, 7, 8) reliés entre eux par liaison de matière, par liaison de forme et/ou par liaison de force et mis en forme en commun, fabriqué à l'aide d'un procédé selon les revendications 1 à 8,
**caractérisé en ce que** le premier flan (4a, 6) est constitué d'un matériau d'acier durcissable par pressage et **en ce qu'**au moins le deuxième flan (4b, 7, 8) est constitué d'un matériau d'acier à haute teneur en manganèse, avec une teneur en manganèse de 6 % en poids à 30 % en poids et une structure essentiellement austénitique, et **en ce que** le premier flan est durci par pressage après le formage, et contient essentiellement une structure martensitique.

10. Composant selon la revendication 9,
**caractérisé en ce que** le flan à haute teneur en manganèse (4b, 7, 8) est constitué d'un matériau d'acier avec la composition d'alliage en % en poids suivante :
| | | | | |
|---|---|---|---|---|
| | | C | ≤ | 1,25 % |
| | | Si | ≤ | 8, 0 %, |
| 6,0 % | ≤ | Mn | ≤ | 30 %, |
| | | Al | ≤ | 11,5 %, |
| | | Cr | ≤ | 10,0 %, |
| | | Ti | ≤ | 0,5 %, |
| | | Nb | ≤ | 0,5 %, |
| | | S | ≤ | 0,01 %, |
| | | Ni | ≤ | 10,0 %, |
| | | Cu | ≤ | 5 %, |
| | | Va | ≤ | 0,5 %, |
le reste étant Fe et des impuretés inévitables.

11. Composant selon la revendication 10 ou 11, **caractérisé en ce que** le flan à haute teneur en manganèse (4b, 7, 8) est constitué d'un matériau d'acier avec la composition d'alliage en % en poids suivante:
| | | | | |
|---|---|---|---|---|
| 0,01 % | ≤ | C | ≤ | 1,0 %, |
| 0, 1 ≤ | ≤ | Si | ≤ | 8,0 %, |
| 10,0 % | ≤ | Mn | ≤ | 30 %, |
| 0,01 % | ≤ | Al | ≤ | 10,0 %, |
| 0,05 % | ≤ | Cr | ≤ | 10,0 %, |
| 0,005 % | ≤ | Ti | ≤ | 0,5 %, |
| 0,005 % | ≤ | Nb | ≤ | 0,5 %, |
| | | S | ≤ | 0,01 %, |
| 0,1 % | ≤ | Ni | ≤ | 8,0 %, |
| 0,001 % | ≤ | Cu | ≤ | 5 %, |
| 0,005 % | ≤ | Va | ≤ | 0,5 %, |
le reste étant Fe et des impuretés inévitables.

12. Composant selon les revendications 8 à 11, **caractérisé en ce que** les parts des composants d'alliage Si, Al, Cr, Ti et Ni de l'alliage d'acier du flan à haute teneur en manganèse sont limitées aux valeurs suivantes :
| | | | | |
|---|---|---|---|---|
| 0,1 % | ≤ | Si | ≤ | 5 %, |
| 0,01 % | ≤ | Al | ≤ | 5 %, |
| 0,05 % | ≤ | Cr | ≤ | 6 %, |
| 0,005 % | ≤ | Ti | ≤ | 0,3 %, |
| 0,1% | ≤ | Ni | ≤ | 4 %. |

13. Composant selon les revendications 8 à 12, **caractérisé en ce que** le composant (9) est fabriqué à partir d'une tôle composite (« tailored Blank ») (4), la tôle composite étant constituée, au moins, du premier et du deuxième flan, ce dernier étant relié au premier par liaison de forme.

14. Composant selon les revendications 8 à 13, **caractérisé en ce que** le deuxième ou l'autre flan à haute teneur en manganèse (4b, 7, 8) est disposé, en renforcement (7), sur le premier flan (6).

15. Utilisation d'un composant selon les revendications 8 à 14 comme pièce structurante en construction automobile, en particulier comme montants A, B et C, longerons ou traverses, renfort de tunnel, cadre de toit ou absorbeur d'énergie.
